# EUROPEAN PATENT APPLICATION

(11) **EP 4 369 134 A1**
(43) Date of publication of application: **15.05.2024**
(21) Application number: 22206534.4
(22) Date of filing: 10.11.2022
(51) Int. Cl.: G05D 1/02

(54) **METHOD AND SYSTEM FOR AUTONOMOUS DRIVING OF A SWAP BODY TRANSPORTER, AND SWAP BODY TRANSPORTER**

(71) Applicant: KAMAG Transporttechnik GmbH & Co. KG, 89079 Ulm (DE); EasyMile SAS, 31000 Toulouse (FR)
(72) Inventor: Pardon, Clement, 31000 Toulouse (FR)
(74) Representative: Ullrich & Naumann PartG mbB

(57) **Abstract**

A method and a system for autonomous driving of a swap body transporter (100, 300) from a first location to second location for picking up a target swap body (200, 301) or for setting down a swap body (200, 301) comprises determining an estimated position of the target swap body (200, 301) in case of picking up the target swap body (200, 301); providing a path (306) from the first location to the second location by a path planning system (307) and in case of picking up the target swap body (200, 301) under consideration of the determined estimated position of the target swap body (200, 301); comparing the current location of the swap body transporter (100, 300) with the provided path (306), in case of picking up the target swap body (200, 301) determining an updated estimated position of the target swap body (200, 301) and comparing the updated estimated position with the previously determined position of the target swap body (200, 301); driving the swap body transporter (100, 300) along the path (306) provided by the path planning system (307) until the current position of the swap body transporter (100, 300) is within a given distance from the second location.

## Description

The present invention relates to a method and a system for autonomous driving of a swap body transporter from a first location to second location for picking up a target swap body or for setting down a swap body.

Further, the present invention relates to a swap body transporter.

Swap bodies or swap body containers are standard freight containers that are used for road and rail transportation since many years. They comprise a main body that is similar to an ISO shipping container and four support legs. Due to the legs, the swap body can be swapped from one carriage to another or left at a parking spot.

Especially in yard applications, it is necessary to transport swap bodies from one place to another. For this task, swap body transporters are used. Transporting swap bodies in a controlled environment like a yard is a repetitive and tedious job. Hence, a need exists to make a swap body transporter autonomous in transporting swap bodies from one place to another. For the autonomous driving of a swap body transporter, especially for picking up the swap body, accurate information about the swap body is needed, for example the position, the orientation or the type of the swap body.

Embodiments of the present invention therefore address the problem of providing an autonomously driving swap body transporter. Further, embodiments of the present invention address the problem of developing an improved swap body transporter.

In a first aspect, the present invention provides a method for autonomous driving of a swap body transporter from a first location to second location for picking up a target swap body or for setting down a swap body comprising the following steps:
- determining an estimated position of the target swap body in case of picking up the target swap body;
- providing a path from the first location to the second location by a path planning system and in case of picking up the target swap body under consideration of the determined estimated position of the target swap body;
- comparing the current location of the swap body transporter with the provided path,
   - if the current location of the swap body transporter is within a given distance from this path the swap body transporter continues to drive along this path, and
   - if the current location of the swap body transporter deviates more than a given distance from the provided path an updated path from the current location of the swap body transporter to the second location is provided by the path planning system and the swap body transporter continues to drive along the updated path;
- in case of picking up the target swap body determining an updated estimated position of the target swap body and comparing the updated estimated position with the previously determined position of the target swap body,
   - if the updated estimated position is within a given distance from the previously determined estimated position of the target swap body, the swap body transporter continues to drive along the path, and
   - if the updated estimated position deviates more than a given distance from the previously determined estimated position of the target swap body an updated path from the current location to the second location is provided by the path planning system and the swap body transporter continues to drive along the updated path; and
- driving the swap body transporter along the path provided by the path planning system until the current position of the swap body transporter is within a given distance from the second location.

In a second aspect, the present invention provides a system for autonomous driving of a swap body transporter from a first location to a second location for picking up a target swap body or for setting down a swap body, preferably for carrying out a method according to the first aspect, being configured to:
- determine an estimated position of the target swap body in case of picking up the target swap body;
- provide a path from the first location to the second location by a path planning system and in case of picking up the target swap body under consideration of the determined estimated position of the target swap body; and
- compare the current location of the swap body transporter with the provided path,
   - if the current location of the swap body transporter is within a given distance from this path the swap body transporter continues to drive along this path, and
   - if the current location of the swap body transporter deviates more than a given distance from the provided path an updated path from the current location of the swap body transporter to the second location is provided by the path planning system and the swap body transporter continues to drive along the updated path;
- in case of picking up the target swap body determine an updated estimated position of the target swap body and compare the updated estimated position with the previously determined position of the target swap body,
   - if the updated estimated position is within a given distance from the previously determined estimated position of the target swap body, the swap body transporter continues to drive along the path, and
   - if the updated estimated position deviates more than a given distance from the previously determined estimated position of the target swap body an updated path from the current location to the second location is provided by the path planning system and the swap body transporter continues to drive along the updated path; and
- drive the swap body transporter along the provided path the current position of the swap body transporter is within a given distance from the second location.

In a third aspect, the present invention provides a swap body transporter for transporting a swap body, comprising at least one sensor and a computing device for carrying out steps of a method according to the first aspect.

In a fourth aspect, the present invention provides a non-transitory computer-readable medium comprising computer-readable instructions that, upon being executed by a system, cause the system to perform the method of the first aspect.

One of the advantages of the invention may be that a swap body transporter can securely drive autonomously in an industrial environment like a yard such that the transportation of swap bodies can be executed without a driver. A further advantage may be that by comparing the current location of the swap body transporter with the provided path a deviation from the path is detected and corrected. Furthermore, by comparing an updated estimated position of the target swap body with a previously estimated position of the target swap body it is possible to securely pick up target swap bodies that are not precisely located at the estimated position, for example by determining an updated second location if the updated estimated position of the swap body is not within a given distance from the previously estimated position of the target swap body. Hence, picking up a target swap body is possible without knowing in advance the exact orientation and position of the swap body. As an a priori knowledge, it might be sufficient to know the size and position of the parking spot where a swap body is supposed to be set down or picked up. Further, the current position of the swap body transporter may be determined by GPS or any further known method.

The term "swap body" in the context of the present disclosure refers to a freight container that comprises a main body that is similar to an ISO shipping container and four support legs. The support legs can be an integral part of the main body, i.e. firmly connected to the main body. Further, the main body may be detachably positioned on a resting structure, wherein the resting structure comprises the support legs. In a preferred embodiment, the swap body can fulfil DIN EN 284:2006 (D). Alternatively or additionally, the main body can comprise a height in the range of 2.60 m to 3.20 m and/or a width in the range of 2.45 m to 2.70 m and/or a length in the range of 7.00 m to 8.00 m. Alternatively or additionally, the support legs can comprise a height in the range of 0.80 m to 1.50 m. For example, the swap body could be of the type C712 or C745 or C782.

In a further embodiment, the position of the target swap body to be picked up by the swap body transporter is determined by a swap body detection system of the swap body transporter. Hence, the determination of the position of the target swap body can be performed while the swap body transporter is following its path to the second location.

According to a further embodiment, the swap body detection system for detection of the target swap body having a front plane, a side plane and four legs, to be picked up by the swap body transporter comprises a fusion and labelling system and at least one sensor and is configured to:
- receive an indication that the swap body transporter reaches an activation location within a distance of the target swap body;
- receive from the fusion and labelling system a pointcloud formed from data provided by the at least one sensor;
- process the received pointcloud by:
   - if the front and the side plane of the target swap body are detected, creating a model, or updating a current model for the target swap body; and
   - if the front plane and at least three of the four legs of the target swap body are detected, creating a model, or updating the current model for the target swap body; and
   - if a model for the target swap body has been created or updated, providing the current model for the target swap body to a navigation system of the vehicle, wherein the current model comprises a calculated location and orientation for the target swap body; and
- repeat the receiving and processing to assist the vehicle navigate from the activation location to a pick-up location enabling picking up the target swap body.
An advantage of such a swap body detection system is that it provides a reliable estimation of the swap body to be picked up.

In a further embodiment, the second location is defined as a point in front of a target swap body to be picked up or in front of a parking space for a swap body to be set down from which the swap body transporter follows a straight line to a final point at which the target swap body is picked up or a swap body is set down. Hence, the swap body transporter is aligned with the target swap body or the set-down position of a loaded swap body in an easy manner.

In a further embodiment, the path planning system comprises a global planner, for example a rapidly-exploring random tree (RRT), a rapidly-exploring random tree star (RRT-star), a rapidly-exploring random tree connect (RRT-connect), a bidirectional rapidly-exploring random tree (bidirectional RRT) or a probabilistic roadmap (PRM), and a local planner, for example a Dubins path algorithm, Reeds-Shepp algorithm, continuous steer algorithm.

According to a further embodiment, C2 continuous paths are generated by the path planning system. If the path planning system, which may comprise a global planner and a local planner, produces C1-continuous paths, an additional algorithm can be used to transform a C1-continuous path to a C2-continuous. A C2-continuous path may have the advantage, that it is possible for the swap body transporter to follow this path with fewer deviation.

In a further embodiment, the path comprises at least one stop point at which the swap body transporter is temporarily stopped and/or the path is located completely inside of a predefined maneuver area and/or a curvature of the path is within a predefined value and/or the sharpness of the path is within a predefined value.

According to a further embodiment, comparing the current location of the swap body transporter with the provided path is conducted when the swap body transporter is located at a stop point and/or comparing an updated estimated position of the target swap body with the previously estimated position of the target swap body is conducted when the swap body transporter is located at a stop point.

In a further embodiment, the swap body transporter comprises at least one sensor and a computing device for carrying out steps of a method according to the first aspect.

There are several ways how to design and further develop the teaching of the present invention in an advantageous way. To this end, it is to be referred to the patent claims subordinate to patent claim 1 on the one hand and to the following explanation of preferred examples of embodiments of the invention, illustrated by the drawing on the other hand. In connection with the explanation of the preferred embodiments of the invention by the aid of the drawing, generally preferred embodiments and further developments of the teaching will be explained. In the drawing
- Fig. 1: shows a simplified top view of a swap boy transporter in which the present technology may be implemented,
- Fig. 2: shows a swap body that may be detected using the present technology,
- Fig. 3: shows an industrial environment wherein autonomous driving of a swap body transporter may be provided by the present technology,
- Fig. 4: shows an overview of the method steps in the present technology, and
- Fig. 5: shows a computing system that may be used in the present technology.

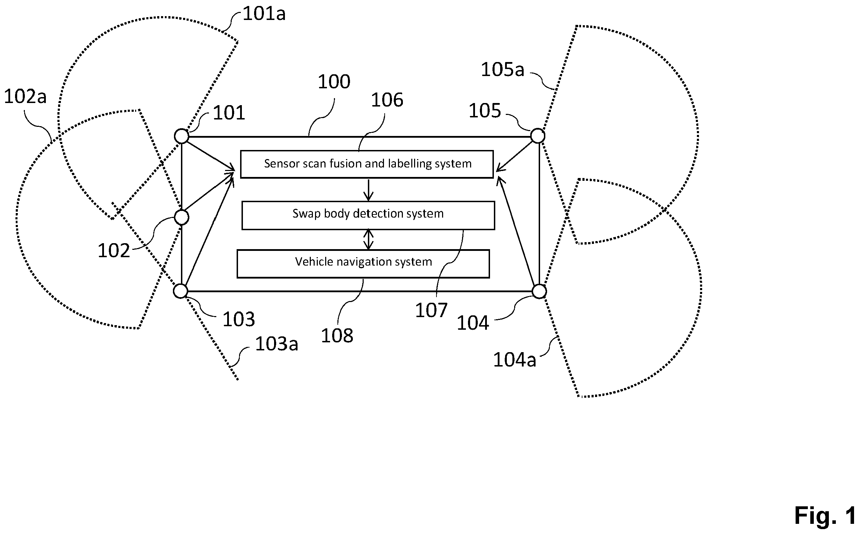

Fig. 1 shows a simplified top view of a swap body transporter in which the present technology may be implemented. Such a swap body transporter 100, may be equipped with, for example, five sensors 101-105. The respective fields of view 101a-105a of such sensors may cover operating range areas at the front (101a-103a) and at the rear (104a-105a) of the swap body transporter 100. As a reminder, fields of view are not represented to scale on Figure 1. Not only the number, but also the mounting location (including height relative to the ground) on the swap body transporter 100, of sensors 101-105 are also depicted as mere examples, and are not limiting with the present technology.

Raw data provided by sensors 101-105 may, as is known by the person skilled in the art, be fed to a sensor scan fusion and labelling system 106, which may process them and form a pointcloud therefrom, for example through fusion. The labelling processing itself by such a system may vary from quasi-absent to more sophisticated, and consist for example in a capability to associate with each point, in addition to XYZ coordinates, a probability information that a given point corresponds to the ground. All such optional labelling capabilities are compatible with the present technology.

The swap body transporter 100 may also be equipped with a transporter navigation system 108, which in the case of a driverless swap body transporter, may action traction and steering of the vehicle.

The present technology may, in such an example, as swap body detection system 107, sit between the sensor scan fusion and labelling system 106 and the transporter navigation system 108 to process the pointcloud output by the sensor scan fusion and labelling system 106, toward detecting a swap body and forming a model thereof that may be fed to the transporter navigation system 108. In such an example, the swap body detection system 107 may also interact with the transporter navigation system 108 and receive feedback from it.

A "model" as used herein, is information related to a swap body that both is calculated by swap body detection system 107 based on the pointcloud received from the sensor scan fusion and labelling system 106, and may be used for assistance by the transporter navigation system 108 when provided to it by the swap body detection system 107.
For example, a model comprises:
- the location of a swap body, for example a XY location of its center; and
- its orientation, for example through a vector extending from the aforementioned XY location.
In aspects of the present technology, the model may further comprise without limitation other information features related to planes, such as their orientation, or a probability that the model matches a particular swap body type, etc.

Finally, even though not represented on Figure 1, it will be apparent to the person skilled in the art that swap body transporter 100 may be communicably connected to a distant server, or other computing system, providing information to including swap body detection system 107 and/or transporter navigation system 108. This communication may take place wirelessly (for example when swap body transporter 100 is in motion). This information may for example be related to navigation of swap body transporter 100 toward a swap body, or expected location or orientation of a particular swap body, or input parameters for the calculations involved in each of the swap body detection system 107 and transporter navigation system 108, that may be received at swap body transporter 100 directly by both systems, or either one of them, and transmitted to the other through interaction between the two.

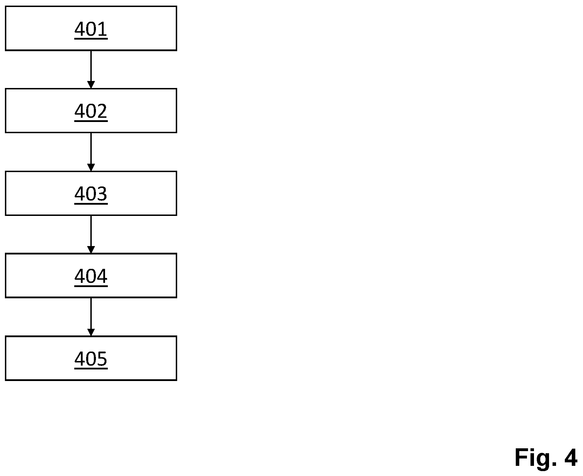

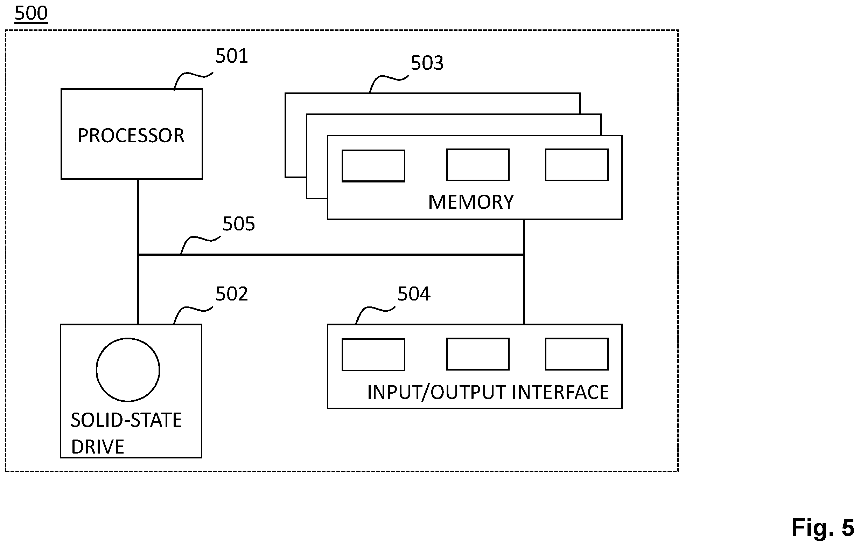

It will be also appreciated by the person skilled in the art that, although conceptually represented physically separated on Figure 1, blocks such as sensor scan fusion and labelling system 106, transporter navigation system 108, and swap body detection system 107 merely represent functions, which may be realized in a single physical entity or in separate physical entities. Conversely, even though represented physically included in the swap body transporter 100, certain of these blocks could represent functions that are performed remotely. Each block may comprise hardware and/or software and/or firmware (or a combination thereof), as is known, to execute functions according to the invention, including the processes described in relation to Figure 4 and/or 5.

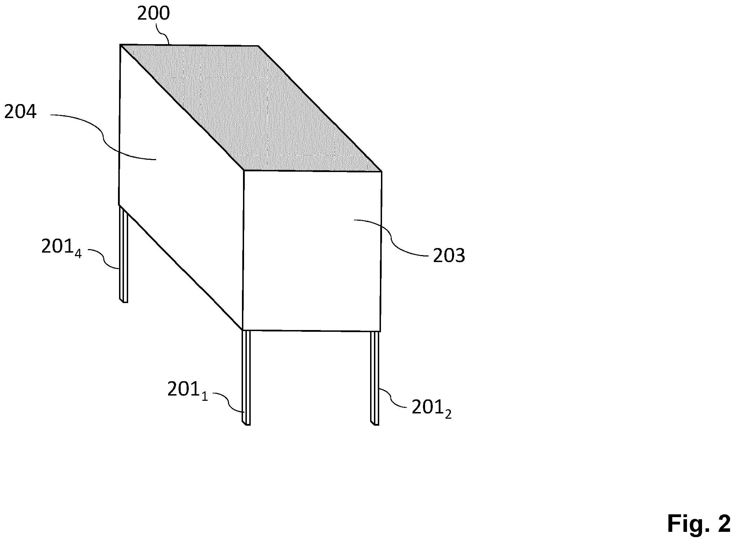

Figure 2 illustrates a swap body that may be detected using the present technology. The assumptions made by the present technology during the detection process, is that a swap body 200 is expected to:
- be a rectangular parallelepiped; and
- have legs 201₁-201₄ extending down from the lower plane (leg 201₃ not shown on Figure 2).
As used herein:
- a front plane 203 is a vertical side of the parallelepiped under which the swap body transporter 100 engages the swap body 200 (and so in the illustrated case, the swap body transporter 100 travels through legs 201₁-201₂; and
- a side plane 204 is a vertical side of the parallelepiped that is perpendicular to the front plane 203.
Apart from possibly the width of the front plane 203 (ex: 2.55m), swap bodies' dimensions are very little standardized. In addition, legs through wear and tear may be damaged, and/or be not strictly perpendicular to the lower plane of the parallelepiped (for example legs are often retractable under the swap body, and may not have been put back up in a complete vertical position).

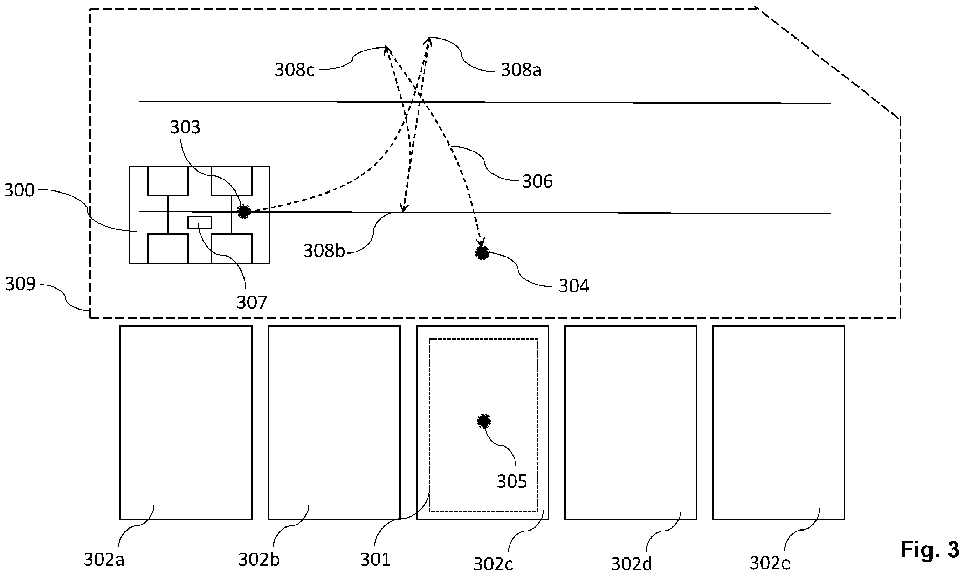

Figure 3 shows an industrial environment wherein autonomous driving of a swap body transporter 300 may be provided by the present technology. The swap body 301 to be picked up or set down is located at a parking spot 302c, wherein in this example several parking spots 302a-302e are located at the industrial environment.

The swap body transporter 300 is located at the first location 303 within the maneuver area 309. The first location 303 could be for example determined via a not shown GPS module or any suitable technique. Further, the first location 303 could be an arbitrary location within the maneuver area 309. The swap body transporter 300 is supposed to drive to the second location 304 in front of parking spot 302c. In this example, second location 304 is a pre-insertion point from which the swap body transporter 300 follows a straight line until it reaches the inserted point 305 at which the target swap body 301 is picked or the swap body 301 is set down. Once the swap body transporter 300 is located at the inserted point 305 the position and/or orientation of the swap body transporter may be determined and compared to the position and/or orientation being necessary for a pick up or set down maneuver of a swap body 301.

The swap body transporter 300 follows a path 306 being provided by a path planning system 307.The path 306 could be loaded from a memory or determined by an algorithm, for example at least one of a rapidly-exploring random tree (RRT), a rapidly-exploring random tree star (RRT-star), a rapidly-exploring random tree connect (RRT-connect), a bidirectional rapidly-exploring random tree (bidirectional RRT) and a probabilistic roadmap (PRM), and/or by at least one of a Dubins path algorithm, a Reeds-Shepp algorithm and continuous steer algorithm. According to an advantageous embodiment, the path 306 could be a C2 continuous path. At least at each stop point 308a-308c the current location of the swap body transporter 300 is compared with the provided path 306. If the current location of the swap body transporter 300 is within a given distance from this path 306 the swap body transporter 300 continues to drive along this path 306, and if the current location of the swap body transporter 300 deviates more than a given distance from the provided path 306 an updated path from the current location of the swap body transporter 300 to the second location 304 is provided by the path planning system 307 and the swap body transporter 300 continues to drive along the updated path.

Further, in case of picking up the target swap body 301 an updated estimated position of the target swap body 301 is determined, for example by a swap body detection system as it is described in Figure 1. The updated estimated position is compared with the previously determined position of the target swap body 301, and if the updated estimated position is within a given distance from the previously determined estimated position of the target swap body 301, the swap body transporter 300 continues to drive along the path 306. If the updated estimated position deviates more than a given distance from the previously determined estimated position of the target swap body 301, an updated second location (pre-insertion point) will be different from the previous second location 304 and hence, an updated path from the current location to the updated second location 304 is provided by the path planning system 307 and the swap body transporter 300 continues to drive along the updated path.

Figure 4 shows an overview of the method steps in the present technology. In case of picking up a target swap body, an estimated position of the target swap body is determined at step 401. For example, the estimated position may be loadad from a memory or received from a human interface. At step 402, a path from the first location, for example the current location of the swap body transporter, to the second location, for example a pre-insertion point, is provided by the path planning system. In case of picking up the target swap body the path is provided under consideration of the determined estimated position of the target swap body, which may have an influence on the location of the second location, for example a pre-insertion point.

At step 403, the current location of the swap body transporter is compared with the provided path. If the current location of the swap body transporter is within a given distance from this path the swap body transporter continues to drive along this path. If the current location of the swap body transporter deviates more than a given distance from the provided path an updated path from the current location of the swap body transporter to the second location is provided by the path planning system and the swap body transporter continues to drive along the updated path.

In case of picking up the target swap body an updated estimated position of the target swap body is determined and compared with the previously determined position of the target swap body at step 404. If the updated estimated position is within a given distance from the previously determined estimated position of the target swap body, the swap body transporter continues to drive along the path. If the updated estimated position deviates more than a given distance from the previously determined estimated position of the target swap body an updated path from the current location to the - updated - second location is provided by the path planning system and the swap body transporter continues to drive along the updated path.

At step 405 the swap body transporter continues to drive along the path provided by the path planning system until the current position of the swap body transporter is within a given distance from the second location.

For example, the steps 403 and 404 may be conducted when the swap body transporter is located at a stop point.

Figure 5 shows a computing system that may be used in the present technology, for example in any one or all of the functional elements swap body detection system 107, sensor scan fusion and labelling system 106 and/or transporter navigation system 108 of Figure 1 or any other of the functional elements described in the previous Figures. As will be appreciated by the person skilled in the art, such computing system may be implemented in any other suitable hardware, software, and/or firmware, or a combination thereof, and may be a single physical entity, or several separate physical entities with a distributed functionality.

In some aspects of the present technology, the computing system 500 may comprise various hardware components including one or more single or multi-core processors collectively represented by a processor 501, a memory 503 and an input/output interface 504. In this context, the processor 501 may or may not be included in a FPGA. In some other aspect, the computing system 500 may be an "off the shelf" generic computing system. In some aspect, the computing system 500 may also be distributed amongst multiple systems. The computing system 500 may also be specifically dedicated to the implementation of the present technology. As a person in the art of the present technology may appreciate, multiple variations as to how the computing system 500 is implemented may be envisioned without departing from the scope of the present technology.

Communication between the various components of the computing system 500 may be enabled by one or more internal and/or external Buses 505 (e.g. a PCI bus, universal serial bus, IEEE 1394 "Firewire" bus, SCSI bus, Serial-ATA bus, ARINC bus, etc.), to which the various hardware components are electronically coupled. The Input/output interface 504 may enable networking capabilities such as wire or wireless access. As an example, the input/output interface 504 may comprise a networking interface such as, but not limited to, a network port, a network socket, a network interface controller and the like. Multiple examples of how the networking interface may be implemented will become apparent to the person skilled in the art of the present technology.

The memory 503 may store code instructions, such as those part of, for example, a library, an application, etc. suitable for being loaded into the Memory 503 and executed by the processor 501 for implementing the method and process steps according to the present technology. The memory 503 may also store a database. The person skilled in the art will appreciate that any of the database, the code instructions, and generally the memory 503, may also physically reside outside of the computing system 500, still within the scope of the present technology.

The input/output interface 504 may allow computing system 500 to be communicably connected to other processors through a connection.

While the above-described implementations have been described and shown with reference to particular steps performed in a particular order, it will be understood that these steps may be combined, sub-divided, or re-ordered without departing from the teachings of the present disclosure. At least some of the steps may be executed in parallel or in series. Accordingly, the order and grouping of the steps is not a limitation of the present technology. It should further be expressly understood that not all technical effects mentioned herein need to be enjoyed in each and every aspect of the present technology.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 100: swap body transporter
- 101-105: sensor
- 101a-105a: field of view
- 106: scan fusion and labelling system
- 107: swap body detection system
- 108: transporter navigation system
- 200: swap body
- 201₁-201₄: legs
- 203: front plane
- 204: side plane
- 300: swap body transporter
- 301: swap body
- 302a-302e: parking spot
- 303: first location
- 304: second location
- 305: inserted point
- 306: path
- 307: path planning system
- 308a-308c: stop point
- 309: maneuver area
- 401-405: step
- 500: computing system
- 501: processor
- 502: ssd
- 503: memory
- 504: input/output device
- 505: bus

## Claims

1. Method for autonomous driving of a swap body transporter (100, 300) from a first location (303) to second location (304) for picking up a target swap body (200, 301) or for setting down a swap body (200, 301) comprising the following steps:
- determining an estimated position of the target swap body (200, 301) in case of picking up the target swap body (200, 301);
- providing a path (306) from the first location (303) to the second location (304) by a path planning system and in case of picking up the target swap body (200, 301) under consideration of the determined estimated position of the target swap body (200, 301);
- comparing the current location of the swap body transporter (100, 300) with the provided path (306),
- if the current location of the swap body transporter (100, 300) is within a given distance from this path (306) the swap body transporter (100, 300) continues to drive along this path (306), and
- if the current location of the swap body transporter (100, 300) deviates more than a given distance from the provided path (306) an updated path (306) from the current location of the swap body transporter (100, 300) to the second location is provided by the path planning system (307) and the swap body transporter (100, 300) continues to drive along the updated path (306);
- in case of picking up the target swap body (200, 301) determining an updated estimated position of the target swap body (200, 301) and comparing the updated estimated position with the previously determined position of the target swap body (200, 301),
- if the updated estimated position is within a given distance from the previously determined estimated position of the target swap body (200, 301), the swap body transporter (100, 300) continues to drive along the path (306), and
- if the updated estimated position deviates more than a given distance from the previously determined estimated position of the target swap body (200, 301) an updated path (306) from the current location to the second location is provided by the path planning system (307) and the swap body transporter (100, 300) continues to drive along the updated path (306); and
- driving the swap body transporter (100, 300) along the path (306) provided by the path planning system (307) until the current position of the swap body transporter (100, 300) is within a given distance from the second location.

2. Method according to claim 1, wherein the second location is at least one of
- loaded from a memory of the path planning system (307), and
- received from an human interface.

3. Method according to claim 1 or claim 2, wherein the position of the target swap body (200, 301) to be picked up by the swap body transporter (100, 300) is determined by a swap body detection system (107) of the swap body transporter(100, 300).

4. Method according to claim 3, wherein the swap body detection system (107) for detection of the target swap body (200, 301) having a front plane (203), a side plane (204) and four legs (201₁-201₄), to be picked up by the swap body transporter (100, 300) comprises a fusion and labelling system and at least one sensor (101-105) and is configured to:
- receive an indication that the swap body transporter (100, 300) reaches an activation location within a distance of the target swap body (200, 301);
- receive from the fusion and labelling system a pointcloud formed from data provided by the at least one sensor (101-105);
- process the received pointcloud by:
- if the front and the side plane (204) of the target swap body (200, 301) are detected, creating a model, or updating a current model for the target swap body (200, 301); and
- if the front plane (203) and at least three of the four legs (201₁-201₄) of the target swap body (200, 301) are detected, creating a model, or updating the current model for the target swap body (200, 301); and
- if a model for the target swap body (200, 301) has been created or updated, providing the current model for the target swap body (200, 301) to a navigation system of the vehicle, wherein the current model comprises a calculated location and orientation for the target swap body (200, 301); and
- repeat the receiving and processing to assist the vehicle navigate from the activation location to a pick-up location enabling picking up the target swap body (200, 301).

5. Method according to any one of claims 1 to 4, wherein the second location is defined as a point in front of a target swap body (200, 301) to be picked up or in front of a parking space for a swap body (200, 301) to be set down from which the swap body transporter (100, 300) follows a straight line to a final point at which the target swap body (200, 301) is picked up or a swap body (200, 301) is set down.

6. Method according to any one of claims 1 to 5, wherein the path planning system (307) comprises a global planner and a local planner.

7. Method according to claim 6, wherein the global planner comprises one of a rapidly-exploring random tree (RRT), a rapidly-exploring random tree star (RRT-star), a rapidly-exploring random tree connect (RRT-connect), a bidirectional rapidly-exploring random tree (bidirectional RRT) and a probabilistic roadmap (PRM), and wherein the local planner comprises one of a Dubins path algorithm, a Reeds-Shepp algorithm and continuous steer algorithm.

8. Method according to any one of claims 1 to 7, wherein C2 continuous paths (306) are generated by the path planning system (307).

9. Method according to any one of claims 1 to 8, wherein the path comprises at least one stop point (308a-308c) at which the swap body transporter (100, 300) is temporarily stopped and/or wherein the path (306) is located completely inside of a predefined maneuver area (309) and/or wherein a curvature of the path (306) is within a predefined value and/or the sharpness of the path (306) is within a predefined value.

10. Method according to claim 9, wherein comparing the current location of the swap body transporter (100, 300) with the provided path (306) is conducted when the swap body transporter (100, 300) is located at a stop point (308a-308c) and/or wherein comparing an updated estimated position of the target swap body (200, 301) with the previously estimated position of the target swap body (200, 301) is conducted when the swap body transporter (100, 300) is located at a stop point (308a-308c).

11. System for autonomous driving of a swap body transporter (100, 300) from a first location (303) to a second location (304) for picking up a target swap body (200, 301) or for setting down a swap body (200, 301), preferably for carrying out a method according to any one of claims 1 to 10, being configured to:
- determine an estimated position of the target swap body (200, 301) in case of picking up the target swap body (200, 301);
- provide a path (306) from the first location (303) to the second location (304) by a path planning system (307) and in case of picking up the target swap body (200, 301) under consideration of the determined estimated position of the target swap body (200, 301); and
- compare the current location of the swap body transporter (100, 300) with the provided path (306),
- if the current location of the swap body transporter (100, 300) is within a given distance from this path (306) the swap body transporter (100, 300) continues to drive along this path (306), and
- if the current location of the swap body transporter (100, 300) deviates more than a given distance from the provided path (306) an updated path (306) from the current location of the swap body transporter (100, 300) to the second location is provided by the path planning system (307) and the swap body transporter (100, 300) continues to drive along the updated path (306);
- in case of picking up the target swap body (200, 301) determine an updated estimated position of the target swap body (200, 301)and compare the updated estimated position with the previously determined position of the target swap body (200, 301),
- if the updated estimated position is within a given distance from the previously determined estimated position of the target swap body (200, 301), the swap body transporter (100, 300) continues to drive along the path (306), and
- if the updated estimated position deviates more than a given distance from the previously determined estimated position of the target swap body (200, 301) an updated path (306) from the current location to the second location is provided by the path planning system (307) and the swap body transporter (100, 300) continues to drive along the updated path (306); and
- drive the swap body transporter (100, 300) along the provided path (306) the current position of the swap body transporter (100, 300) is within a given distance from the second location.

12. Swap body transporter (100, 300) for transporting a swap body (200, 301), comprising at least one sensor and a computing device for carrying out steps of a method according to any one of claims 1 to 10.

13. A non-transitory computer-readable medium comprising computer-readable instructions that, upon being executed by a system, cause the system to perform the method of any of the claims 1 to 10.
